Europäisches Patentamt

(19) European Patent Office

Office européen des brevets

(11) Publication number : **0 332 779 B1**

# (12) EUROPEAN PATENT SPECIFICATION

(45) Date of publication of patent specification :
12.07.95 Bulletin 95/28

(51) Int. Cl.⁶ : **G06F 3/12,** G06K 15/00

(21) Application number : **88310906.8**

(22) Date of filing : **18.11.88**

(54) **Apparatus and method for producing output data for a printing operation, and a printer, in combination with the apparatus, for performing the printing operation.**

(30) Priority : **17.03.88 JP 64192/88**
**13.05.88 JP 117416/88**

(43) Date of publication of application :
**20.09.89 Bulletin 89/38**

(45) Publication of the grant of the patent :
**12.07.95 Bulletin 95/28**

(84) Designated Contracting States :
**DE FR GB**

(56) References cited :
**US-A- 4 679 153**
**PATENT ABSTRACTS OF JAPAN vol. 10, no. 357 (M-540)2 December 1986 & JP-A-61 154 973 (NEC HOME ELECTRONICS) 14 July 1986**

(73) Proprietor : **SEIKO EPSON CORPORATION**
**4-1, Nishishinjuku 2-chome**
**Shinjuku-ku Tokyo-to (JP)**

(72) Inventor : **Aoyama, Tsuyoshi**
**c/o Seiko Epson Corporation**
**3-5 Owa 3-chome**
**Suwa-shi Nagano-ken (JP)**
Inventor : **Takahashi, Tetsuro**
**c/o Seiko Epson Corporation**
**3-5 Owa 3-chome**
**Suwa-shi Nagano-ken (JP)**

(74) Representative : **Sturt, Clifford Mark et al**
**J. MILLER & CO.**
**34 Bedford Row**
**Holborn**
**London WC1R 4JH (GB)**

# Description

The present invention relates to an apparatus and a method for producing output data for a printing operation in response to input data such as character codes and control codes received from a device. The invention also relates to a printer in combination with the aforementioned apparatus.

A printer may be connected to a variety of different host units when being used, and hence it is advantageous if printing can be performed in accordance with a variety of different groups of character codes and control codes corresponding to the different host units. In order to provide this facility, the printer body may either incorporate a plurality of printing control means which are selectively changed over by a switch, or it may include a cartridge carrying an attachable/detachable printing control means. An example of the latter arrangement is discussed in Patent Abstracts of Japan, vol. 10, No. 357 (M-540), 2 December 1986 & JP-A-61 154 973.

In either case, there is a necessity for selectively changing over the printing control means after confirming the types of host units connected to the printer. This connecting process requires a good deal of labour. And, in addition, meaningless data may be printed if the printer remains adjusted to the wrong kind of host unit. Consequently, the variety of host units to which the printer can be connected is limited.

It is an object of the present invention to provide an apparatus, method and printer capable of automatically selecting codes corresponding to a particular host unit.

According to one aspect of the present invention, there is provided apparatus for producing output data for a printing operation in response to input data such as character codes and control codes received from a device, the apparatus comprising input data storage means for storing data received from the device, and converting means for converting codes in the input data into codes for said printing operation on the basis that the codes in the input data are of a particular code group, characterised in that judging means are provided for determining the degree to which the input data coincides with the syntax of a plurality of known code groups in order to judge to which of the known code groups the input data belongs, and in that said converting means converts the codes of the input data on the basis that they are of the group to which they are judged to belong by said judging means.

According to another aspect of the present invention, there is provided a method of producing output data for a printing operation in response to input data such as character codes and control codes received from a device, the method including storing input data received from the device, and converting codes in the input data into codes for said printing operation on the basis that the codes in the input data are of a particular code group, characterised in that the degree to which the input data coincides with the syntax of a plurality of known code groups is determined and used in order to judge to which of the known code groups the input data belongs, and in that the codes of the input data are converted on the basis that they are of the group to which they are judged to belong.

According to another aspect of the present invention, there is provided, in combination, apparatus as aforesaid and a printer for performing the printing operation.

Preferably, the apparatus is characterised by the code judging means including: means for analysing the data in terms of the probabilities of the data corresponding to each of the code groups; and means for determining the code group under which the data comes.

In accordance with the present invention, the types of character codes and control codes imparted from a variety of host units may be automatically judged.

The invention will be described further, by way of example, with reference to the accompanying drawings, in which:

Figure 1 is a circuit diagram showing the basic elements of one embodiment of the present invention;

Figure 2 is a diagram of an application of the circuit shown in Figure 1;

Figure 3 is a flow chart illustrating the operation of a character code/control code judging unit of the circuit shown in Figure 1;

Figure 4 is a diagram explaining in detail the judgement of the control codes according to the present invention.

Figure 5 is a diagram showing hardware for use in the present invention; and

Figure 6 is a circuit diagram illustrating another embodiment of the present invention.

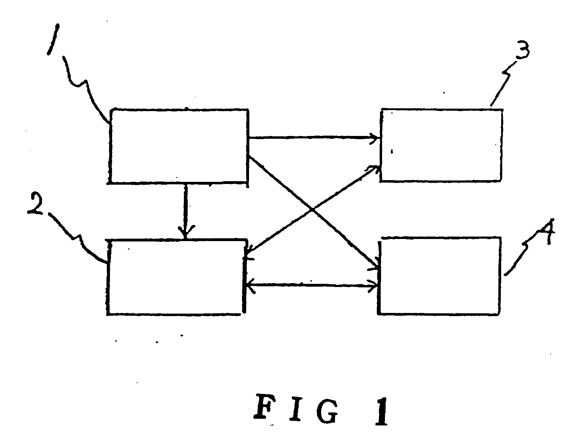

Referring first to Figure 1, there is illustrated one embodiment of the present invention. An input data buffer, generally designated 1, stores data from one or more host units. The numerals 3 and 4 respectively denote first and second printing control units, each being responsive to a different group of character codes and control codes. A character code/control code judging unit 2 serves to determine whether the data stored in the input data buffer 1 should be applied to the printing control unit 3 or the printing control unit 4.

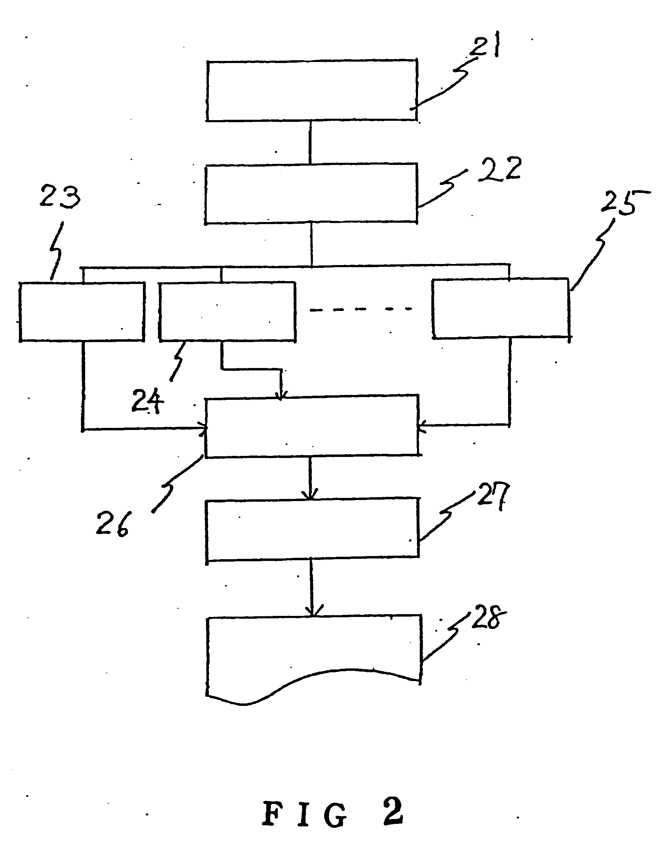

In the application of this circuit, shown in Figure 2, the numeral 21 designates the input data buffer for storing the data and the numeral 22 designates the control code judging unit. In this instance, the control code judging unit 22 judges whether the data in the input data buffer 21 falls into any one of a plurality of groups of character codes and control codes. If it does, the control code judging unit 22 applies the data to a corresponding one of a plurality of the printing control units, designated 23 to 25. Such data and any subsequent information is then supplied by that printing control unit to a line buffer 26 for storage, and by the line buffer 26 to a printer 27 for printing, for example in the form of a chart 28.

More especially, the data from the host unit is temporarily stored in the input data buffer 1 (or 21). After an amount of data stored in the input data buffer 1 has reached a prescribed value, or after storing the final item of data if the next transfer of data is not executed within a predetermined time, the data stored in the input data buffer 1 is de-crypted by the character code/control code judging unit 2 (or 22).

The data stored in the input data buffer 1 is sequentially de-coded by the control code judging unit 2. The control code judging unit 2 makes a comparison between the data from the input data buffer 1 and the groups of character/control codes, and judges on this basis whether the data falls within the respective group of character and control codes of either (or any) of the printing control units.

In order to perform this comparison, the unit 2 classifies the specific character codes and control codes of each group by the steps of: dividing the control codes into types, for example, the codes which exist in one group alone, and the codes which exist in each group but which in each case have arguments falling within a specifiable range; and weighting the codes accordingly. Particularly, the control code judging unit 2 classifies the control codes into the following three types:

(1) control codes peculiar to a certain group;

(2) control codes which exist generally in a plurality of groups but which include a sequence of parameters and the like that differs between the groups; and

(3) control codes which exist in the plurality of groups and which include a sequence of parameters and the like that is invariable between the groups.

The control code judging unit 2 then considers whether the items of data from the input data buffer fall within these types of control code and makes the following judgements regarding such data items: in connection with items of data falling within type (1), it is assumed that there is a high probability of such data items coming under the group in which the control codes concerned are employed; in connection with items of data falling within type (2), it is assumed that the data items falling within an effective range of the sequence of parameters and the like, have a high probability of coming under any group which includes that range, but otherwise the probability of the data items coming under a particular group is low; and in connection with items of data falling within type (3), it is assumed that no judgement need be made.

On the basis of the foregoing criteria, the control code judging unit 2 expresses in numerical form the probability that the given data falls within each specific group, and finally the group from which the maximum numerical value is obtained is selected.

Referring now to Figures 1, 3 and 4, the operation of the character code/control code group judging unit 2 (control unit 22 of Figure 2) will be explained in still greater detail. The character code/control code judging unit 2 judges the degree to which the data stored in the input data buffer 1 coincides with the control code syntax of the printing control unit 3 and with the control code syntax of the printing control unit 4.

When making a comparison between the stored data and the control codes of a respective one of the printing control units 3 or 4, the following criteria are employed for allocating a numerical value to the stored data:

(1) In the case of an item of data corresponding to a control code which has a plural number of bytes and an argument with a small range, if the item of data falls within the effective range of the argument - 3 points;

(2) In the case of an item of data corresponding to a control code which has a plural number of bytes and an argument covering all the possible values of the item of data - 2 points;

(3) In the case of an item of data corresponding to a control code which has a plural number of bytes and an argument, if the item of data falls outside the effective range of the argument - 0 points;

(4) In the case of an item of data corresponding to a control code having 1 or 2 bytes and no argument - 1 point; and

(5) In the case of items of data corresponding to undefined control codes - 0 points.

Where the arguments of the control codes of plural bytes are a valid match with the data, the points are given so as to obtain the maximum, thus facilitating the comparative examination. That the points are scored to provide the maximum for the above described situation results in a remarkably small probability that a sequence of random numerical values stored in the input data buffer 1 will fall within any of the groups of control codes. Paradoxically, if the sequence of numerical values satisfies the effective range of the argument portions of the control codes, the probability that the sequence of numerical values is included in the specific printing control unit is high. In the case of the control codes of 1 or 2 byte's length, for the above described reason, the points allocated are less than for the control codes of plural bytes; and 0 points are given with respect to undefined control codes and also the control codes of plural bytes in which the argument portions are unsatisfied. The whole sequence of data in the input data buffer 1 may thus be expressed in numerical form by such a method as a total value, $\Sigma P$, where $P$ is the number of points given to each item of data in relation to a specific printing control unit.

The next step is to obtain a total value $\Sigma$ Pmax for the points awarded should the items of data in the input data buffer 1 coincide fully with the control code syntax of the printing control unit 3 or 4. $\Sigma$ Pmax represents a total of the obtainable maximum points, assuming that the data stored in the input data buffer 1 is conceived as the control codes of the printing control unit 3 or 4.

It is then possible to determine the probability that the random data stored in the input data buffer 1 corresponds with the control codes of the printing control unit 3 or 4 by calculating a ratio of $\Sigma$ P with respect to $\Sigma$ Pmax. A judgement can then be made by obtaining such a probability in regard to each of the printing control units 3 and 4.

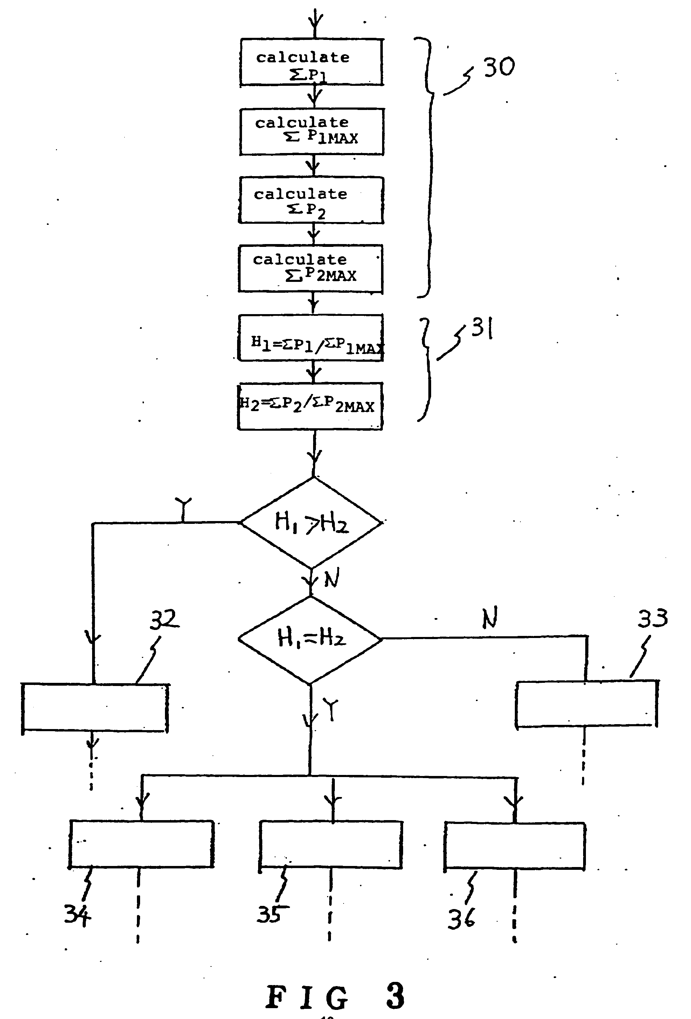

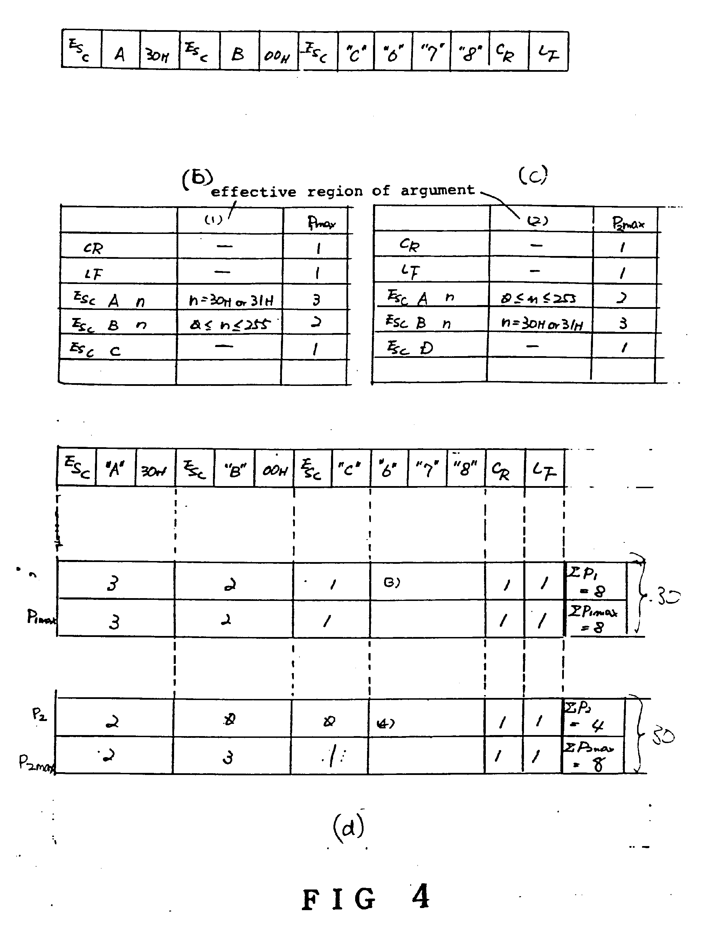

A more specific explanation will be given with reference to Figures 3 and 4. Figure 4 (a) illustrates a sequence of data stored in the input data buffer 1.

Figure 4 (b) is a diagram showing an example of the control codes of the printing control unit 3. Figure 4 (c) is a diagram illustrating an example of the control codes of the printing control unit 4.

To start with, the character code/control code judging unit 2 compares the data stored in the input data buffer 1 with the control code syntax of the printing control unit 3 and further with the control code syntax of the printing control unit 4 in order to compute $\Sigma P_1$, $\Sigma P_1$max, $\Sigma P_2$ and $\Sigma P_2$max (indicated by the reference numeral 30 in the flow chart of Figure 3 and in Figure 4 (d)). In the example shown in Figure 4, $\Sigma P_1 = 8$, $\Sigma$ Pmax = 8, $\Sigma P_2 = 4$ and $\Sigma P_2$max = 8. It should be noted that the characters from the sequence of data are not conceived as items to be compared in this embodiment.

A more detailed description will be given with reference to Figures 4 (b) to 4 (d).

Referring first to Figure 4 (b), the code CR does not have an argument and hence it attracts 1 point in accordance with the criterion (4) above. The code ESC A $\underline{n}$, when the argument $\underline{n}$ = 30H or 31H, attracts 3 points according to criterion (1). The code ESC B $\underline{n}$, when the argument $\underline{n}$ ranges from 0 to 255, (since $\underline{n}$ is expressed by 1 byte, 00 ~ FFH can probably be provided in the hexadecimal form) attracts 2 points according to criterion (2). This sets $\Sigma P_1$max.

A value of $\Sigma P_2$ max is set likewise as shown in Figure 4 (c).

Turning to Figure 4 (d), it can be seen that $P_1$ is the same as $P_1$max for each item of data. However, this is not so for $P_2$. In the case of the item ESC "B" 00H, the argument is 00H and $P_2 = 0$ because of the argument being outside the effective region of the control code. Similarly, in the case of the item ESC "C", the printing control unit 4 has no corresponding control code and so $P_2 = 0$ in accordance with criterion (5). However, a corresponding code ESC "D" is pro-

vided and hence $P_2$max = 1.

Next $H_1$ and $H_2$ are calculated where $H_1 = \Sigma P_1 / \Sigma P_1$max and $H_2 = \Sigma P_2 / \Sigma P_2$max as indicated by reference numeral 31 in Figure 3.

From these values, a judgement as to whether the data in the input data buffer 1 corresponds with the codes of the printing control unit 3 or 4 is made as follows:

If $H_1 > H_2$, the data is conceived in step 32 of the flow chart as the control codes of the printing control unit 3; and

If $H_1 < H_2$, the data is conceived in step 33 of the flow chart as the control codes of the printing control unit 4.

When $H_1 = H_2$, there is a high probability that the data stored in the input data buffer 1 corresponds with the control codes common to the two printing control units or includes character codes alone. In the character code/control code group judging unit 2, as discussed above, an amount of data having a prescribed value is employed for judgement. In some cases, however, the judgement can be made by augmenting the prescribed value and increasing the quantity of data used for the judgement.

In step 34, an additional check is effected on the characters in the stored data. In step 35, if access to the data corresponding to the undefined codes can be obtained, the probability that the data is not conceived as that of the compared printing control unit is high. In general, when $H_1 = H_2$, a judgement can be made by performing these above mentioned steps. Nevertheless, if the result is still ambiguous, it is permitted that the processing be carried out either by the printing control unit 3 or by the printing control unit 4 (step 36).

In the example shown in Figure 4, $H_1 = 8/8$ and $H_2 = 4/8$, and the relation $H_1 > H_2$ is established. Therefore, it can be understood that the data of Figure 4 (a) coincides with the control codes of the printing control unit 3.

After judging whether the printing control unit 3 or the printing control unit 4 is to be used, the character code/control code judging unit 2 transfers the processing of the data from the input data buffer 1 to the printing control unit 3 or 4, thus terminating the judging process. The selected printing control unit 3 or 4 then initiates the printing of the data stored in the input data buffer 1 in accordance with the predetermined procedures. The amount of data to be processed by the printing control unit 3 or 4 may be determined as follows:

The data quantity now to be processed is classified into two categories: according to one, only the data which has been used for judgement is processed; and according to the other, there is processed a quantity of data exceeding that used for judgement and which extends to the interruption of the data transfer from the host units. If the processing is effected in a state where the judging unit 2 did not provide any judgement, the former case is adopted. The judging accuracy is improved by re-judging the next sequence of data. If a judgement was made by the judging unit, both cases may be adopted. However, the processing capability is enhanced by taking the latter case. After processing the above described data, the printing control unit 3 or 4 returns the processing to the character code/ control code judging unit.

In the example of Figure 4, because ESC...CR, LF are used for judgement, the data up to CR, LF are processed by the printing control unit 3. Thereafter, the controlling process is returned to the control code judging unit 2.

In the above embodiment, the description has been centered on an arrangement in which only two different types of printing control units are employed. The present invention may, however, be embodied by the foregoing method when three or more different types of printing control units are provided, for example as shown in Figure 2.

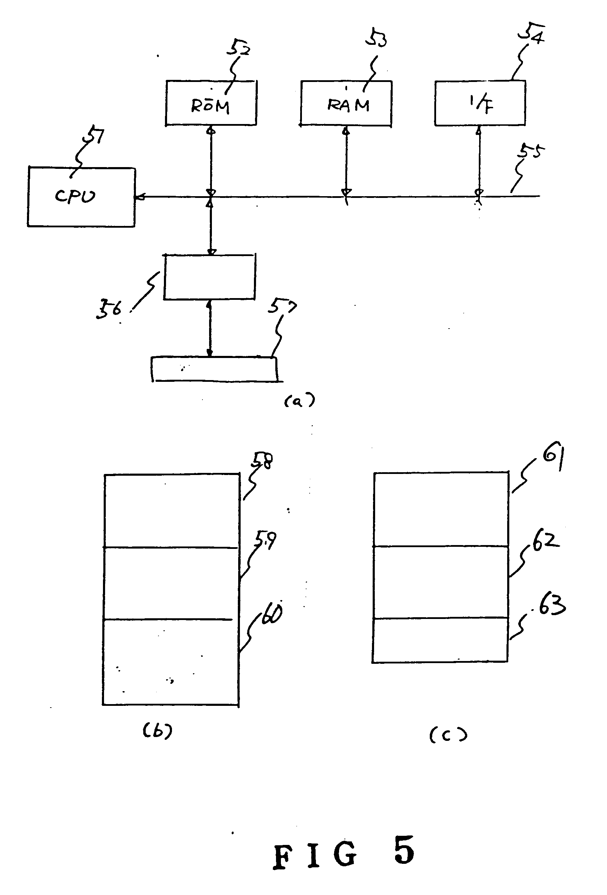

Figure 5 illustrates an arrangement of hardware for one embodiment of the present invention. In Figure 5, the numeral 51 represents a CPU for executing an arithmetic operation and analysis and issuing an input/output command. The numeral 52 denotes a ROM for storing the data and the programs of the CPU 51. The ROM 52 is composed of a printing control unit 58, a printing control unit 59 and a character code/control code judging unit 60. The numeral 53 denotes a RAM comprising an input data buffer 61 for storing the data transferred from unillustrated host units, a line buffer 62 for storing the data to be printed and a system work area 63 used by the CPU 51. An I/F unit, generally designated 54, serves to receive the data from the host units. The numeral 56 indicates an I/O control circuit for operating a printer mechanism 57. The components indicated at 51 to 56 are combined to form a control module of the printer device connected to a system bus 55.

After the control codes have automatically been judged, the specific control code, which is now being transferred, may be arranged to be displayed on an operation panel mounted on the printer.

If $H_i$ exceeds a given value, it may be judged that $H_i$ belongs to the corresponding control code, without calculating $H_i$ one by one.

When there exists a multiplicity of control code groups, the need to obtain each $H_i$ can be avoided by arranging several similar groups en bloc into a cluster and by calculating $H_i$ in connection with the control code groups which represent each cluster. In regard to the control code groups of a cluster having a small $H_i$, the pertinency is low, and hence the calculation of $P_i$ and $P_i$max may be omitted.

The printer to which the present invention can be applied may be a serial printer such as a serial impact dot matrix printer, a line printer and a page printer such as a laser printer.

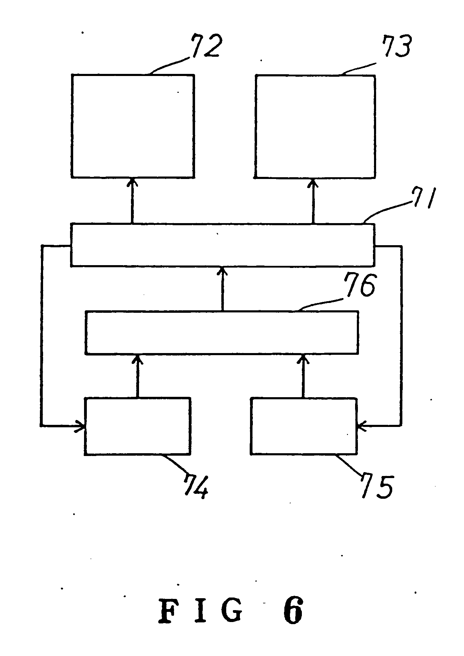

Figure 6 is a block diagram illustrating a configuration of another embodiment of the present invention. Selecting means 71 is intended to select analysing means 72 of a control code system A or analysing means 73 of a control code system B on the basis of compared results given by comparison means 76. The means 71 to 73 correspond with the judging unit 2 and control units 3 and 4 of Figure 1.

Every time the selecting means 71 selects one of the analysing means, say 72, the number of repetitions of the selection of the means 72 is written into A storage means 74. Likewise, if the means 73 is selected, this number is written into B storage means 75. Both of the A and B storage means 74 and 75 are of non-volatile type. If the power supply of the entire system is shut off, the data as to the number of repetitions which are stored in the storage means 74 and 75 can be held.

The comparison means 76 compares the contents of the A and B storage means 74 and 75 and judges whether the control code system A or B has been selected more frequently.

Control programs executed by the CPU incorporated into the unillustrated printer correspond to the selecting means 71, the analysing means 72 and 73 and the comparing means 76.

When switching on the power supply or inputting an initialisation signal, the comparison means 76 reads the contents of the A and B storage means 74 and 75 and compares the magnitudes thereof. Subsequently, the comparison means 76 imparts to the selecting means 71 the information indicating whether the A or B storage means has the maximum content. It is assumed that the A storage means has a larger content than that of the B storage means in this example. The selecting means 71 receives an output from the comparison means, and immediately makes effective the analysing means 72 of the control system A. The steps up to this point are to be carried out as a part of initialising process every time the power supply has been switched on.

Next, selecting means 71 makes a judgement as to the working control code system. The result of its judgement is classified into the following three types:
  (a) the control code system A is to be used;
  (b) the control code system B is to be used; and
  (c) the judgement cannot be made.

In the case of (a), the selecting means 71 increases the content of the storage means 74 by 1 and makes effective the analysing means 72 of the control code system A. The analysing means 72 processes the input data transferred from an outside host in conformity with regulations of the control code system A.

In the case of (b) also, the same operations as those in (a) are performed on the control code system B. In (a) and (b) there is exerted no influence of the present invention.

The case of (c) is associated with the effects of the present invention. Specifically, when being incapable of providing the judgement, the selecting means 71 permits the control code system to remain effective, which exhibits the highest degree of frequency of use in the past, without changing the analysing means selected so far.

Thereafter, when providing a timing in any form causing the selecting means 71 to initiate the judging process, the operation reverts to (a), (b), and (c). If the judgement regarding the control code system is made, the selecting means 71 increases the content of the relevant storage means and makes the relevant analysing means effective. If not, the analysing means remains effective as it is. Such steps are repeated.

In the above described embodiment, there have been exemplified a comparison between the control code systems A and B. However, any one of three or more control code systems may be selected.

As discussed above, the described embodiments feature a plurality of printing control units responsive to the character codes and the control codes from a variety of host units; the data transferred from the host units is de-coded; and one printing control unit is selected. By virtue of this arrangement, it is possible not only to automatically produce the printing resulting from connecting the host units to the printer, but also to facilitate the connection with no necessaity for selectively changing over the printing control means to conform to the host units.

**Claims**

1. Apparatus for producing output data for a printing operation in response to input data such as character codes and control codes received from a device, the apparatus comprising input data storage means (1,21) for storing data received from the device, and converting means (3,4,23,24,25,72,73) for converting codes in the input data into codes for said printing operation on the basis that the codes in the input data are of a particular code group, characterised in that judging means (2,22,71) are provided for determining the degree to which the input data coincides with the syntax of a plurality of known code groups in order to judge to which of the known code groups the input data belongs, and in that said converting means converts the codes of the input data on the basis that they are of the group to which they are judged to belong by said judging means.

2. Apparatus as claimed in claims 1 characterised in that said converting means (3,4,23,24,25,72,73) comprises a plurality of print control units, each of which being responsive to a respective one of said known code groups for producing output data for a printing operation, the input data being applied to one of said print control units which is selected according to which of said known code groups the input data is judged to belong by said judging means (2,22,71).

3. Apparatus as claimed in claim 1 or 2 characterised in that said judging means determines the degree to which the input data coincides with the syntax of each of said plurality of known code groups by calculating a total score ($\Sigma P$) for each of the known code groups, the total score being calculated by incrementing it when a control code in the input data coincides with the syntax of a code in the known code group, the increment being by a first amount when the control code in the input data has a plural number of bytes and an argument with a small range, by a second amount when the control code in the input data has a plural number of bytes and an argument covering all possible values of the item of data, and by a third amount when the control code in the input data has 1 or 2 bytes and no argument, the first amount being greater than the second amount and the second amount being greater than the third amount, and by calculating a maximum score ($\Sigma Pmax$) for each of said known code groups, the maximum score being calculated by incrementing it for each control code in said input data, the increment being by the first amount when the control code in the input data has a plural number of bytes and an argument with a small range, by the second amount when the control code in the input data has a plural number of bytes and an argument covering all possible values of the item of data, and by the third amount when the control code in the input data has 1 or 2 bytes and no argument, the degree to which the input data coincides with the syntax of each of said plurality of known code groups being determined by dividing the total score ($\Sigma P$) by the maximum score ($\Sigma Pmax$).

4. Apparatus as claimed in any preceding claim, characterised by comprising storage means (74,75) for storing a value corresponding to the number of times the input data is judged to belong to each one of the known code groups, and in that said converting means converts the codes of the input data on the basis that they are of the group having the highest value stored in said storage means when said judging means cannot determine to which group the input data belongs.

5. In combination, apparatus according to any preceding claim and a printer performing the printing operation.

6. A method of producing output data for a printing operation in response to input data such as character codes and control codes received from a device, the method including storing input data received from the device, and converting codes in the input data into codes for said printing operation on the basis that the codes in the input data are of a particular code group, characterised in that the degree to which the input data coincides with the syntax of a plurality of known code groups is determined and used in order to judge to which of the known code groups the input data belongs, and in that the codes of the input data are converted on the basis that they are of the group to which they are judged to belong.

7. A method as claimed in claim 6 characterised in that the degree to which the input data coincides with the syntax of each of said plurality of known code groups is determined by calculating a total score ($\Sigma P$) for each of the known code groups, the total score being calculated by incrementing it when a control code in the input data coincides with the syntax of a code in the known code group, the increment being by a first amount when the control code in the input data has a plural number of bytes and an argument with a small range, by a second amount when the control code in the input data has a plural number of bytes and an argument covering all possible values of the item of data, and by a third amount when the control code in the input data has 1 or 2 bytes and no argument, the first amount being greater than the second amount and the second amount being greater than the third amount, and by calculating a maximum score ($\Sigma Pmax$) for each of said known code groups, the maximum score being calculated by incrementing it for each control code in said input data, the increment being by the first amount when the control code in the input data has a plural number of bytes and an argument with a small range, by the second amount when the control code in the input data has a plural number of bytes and an argument covering all possible values of the item of data, and by the third amount when the control code in the input data has 1 or 2 bytes and no argument, the degree to which the input data coincides with the syntax of each of said plurality of known code groups being determined by dividing the total score ($\Sigma P$) by the maximum score ($\Sigma Pmax$).

8. A method as claimed in claim 6 or 7 characterised in that a value corresponding to the number of times the input data is judged to belong to each one of the known code groups is stored and in that the codes of the input data are converted on the basis that they are of the group having the highest value stored when the group to which the input data belongs cannot be determined.

**Patentansprüche**

1. Einrichtung zum Erzeugen von Ausgabedaten für einen Druckvorgang in Antwort auf Eingabedaten, wie z.B. Zeichencodes und Steuercodes, welche von einer Vorrichtung empfangen werden, wobei die Einrichtung Eingabedatenspeichermittel (1, 21) zum Speichern von Daten umfaßt, welche von der Vorrichtung empfangen werden, sowie ein Umwandlungsmittel (3, 4, 23, 24, 25, 72, 73) zum Umwandeln der Codes in den Eingabedaten in Codes für den Druckvorgang auf der Basis, daß die Codes in den Eingabedaten von einer speziellen Codegruppe sind, dadurch gekennzeichnet daß ein Beurteilungsmittel (2, 22, 71) vorgesehen ist zum Bestimmen des Ausmaßes, in welchem die Eingabedaten mit der Syntax einer Mehrzahl bekannter Codegruppen übereinstimmen, um zu beurteilen, zu welcher der Codegruppen die Eingabedaten gehören, und daß das Umwandlungsmittel die Codes der Eingabedaten auf der Basis umwandelt, daß sie von der Gruppe sind, zu welcher sie durch das Beurteilungsmittel als zugehörig beurteilt worden sind.

2. Einrichtung nach Anspruch 1, dadurch gekennzeichnet, daß das Umwandlungsmittel (3, 4, 23, 24, 25, 72, 73) eine Mehrzahl von Drucksteuereinheiten umfaßt, von welchen jede auf eine jeweilige der bekannten Codegruppen anspricht, um Ausgabedaten für den Druckvorgang zu erzeugen, wobei die Eingabedaten an eine der Drucksteuereinheiten angelegt werden, welche danach ausgewählt ist, zu welcher der Codegruppen die Eingabedaten durch das Beurteilungsmittel (2, 22, 71) als zugehörig beurteilt sind.

3. Einrichtung nach Anspruch 1 oder 2, dadurch gekennzeichnet, daß das Beurteilungsmittel das Ausmaß bestimmt, in welchem die Eingabedaten mit der Syntax von jeder der Mehrzahl von Codegruppen übereinstimmen, indem für jede der bekannten Codegruppen ein Gesamtwert ($\Sigma P$) berechnet wird, wobei der Gesamtwert durch inkrementelles Aufwärtszählen desselben berechnet wird, wenn ein Steuercode in den Eingabedaten mit der Syntax eines Codes in der bekannten Codegruppe übereinstimmt, wobei das Inkrement ein erster Betrag ist, wenn der Steuercode in den Eingabedaten eine Mehrzahl von Bytes und ein Argument mit einem kleinen Bereich aufweist, ein zweiter Betrag ist, wenn der Steuercode in den Eingabedaten eine Mehrzahl von Bytes und ein Argument aufweist, welches alle möglichen Werten des Datenelements abdeckt, und ein dritter Betrag ist, wenn der Steuercode in den Eingabedaten ein oder zwei Bytes und kein Argument aufweist, wobei der erste Betrag größer ist als der zweite Betrag und der zweite Betrag größer ist als der dritte Betrag, und durch Berechnen eines Maximalwertes ($\Sigma$Pmax) für jede der bekannten Codegruppen, wobei der Maximalwert berechnet wird durch inkrementelles Aufwärtszählen desselben für jeden Steuercode in den Eingabedaten, wobei das Inkrement ein erster Betrag ist, wenn der Steuercode in den Eingabedaten eine Mehrzahl von Bytes und ein Argument mit einem kleinen Bereich aufweist, ein zweiter Betrag ist, wenn der Steuercode in den Eingabedaten eine Mehrzahl von Bytes und ein Argument aufweist, welche alle möglichen Werte des Datenelements abdeckt, und ein dritter Betrag ist, wenn der Steuercode in den Eingabedaten ein oder zwei Bytes und kein Argument aufweist, wobei das Ausmaß, in welchem die Eingabedaten mit der Syntax von jeder der Mehrzahl bekannter Codegruppen übereinstimmt, durch Dividieren des Gesamtwertes ($\Sigma$P) durch den Maximalwert ($\Sigma$Pmax) bestimmt wird.

4. Einrichtung nach einem der vorhergehenden Ansprüche, dadurch gekennzeichnet, daß sie ein Speichermittel (74, 75) zum Speichern eines Wertes umfaßt, welcher der Anzahl an Wiederholungen entspricht, mit welcher beurteilt wird, daß die Eingabedaten zu jeder der bekannten Codegruppen gehört, und daß das Umwandlungsmittel die Codes der Eingabedaten auf der Basis umwandelt, daß sie von der Gruppe sind, welche den höchsten in dem Speichermittel gespeicherten Wert aufweist, wenn das Beurteilungsmittel nicht bestimmen kann, zu welcher Gruppe die Eingabedaten gehören.

5. Kombination einer Einrichtung nach einem der vorhergehenden Ansprüche mit einem Drucker, welcher den Druckvorgang durchführt.

6. Verfahren zum Erzeugen von Ausgabedaten für einen Druckvorgang in Antwort auf Eingabedaten, wie z.B. Zeichencodes und Steuercodes, welche von einer Vorrichtung empfangen werden, wobei das Verfahren umfaßt: das Speichern von Eingabedaten, welche von der Vorrichtung empfangen werden, und das Umwandeln von Codes in den Eingabedaten in Codes für den Druckvorgang auf der Basis, daß die Codes in den Eingabedaten von einer bestimmten Codegruppe sind, dadurch gekennzeichnet, daß das Ausmaß, in welchem die Eingabedaten mit der Syntax einer Mehrzahl bekannter Codegruppen übereinstimmen, bestimmt wird und dazu verwendet wird, zu beurteilen, zu welcher der bekannten Codegruppen die Eingabedaten gehören, und daß die Codes der Eingabedaten auf der Basis umgewandelt werden, daß sie von der Gruppe sind, zu welcher sie als zugehörig beurteilt werden.

7. Verfahren nach Anspruch 6, dadurch gekennzeichnet, daß das Ausmaß, in welchem die Eingabedaten mit der Syntax von jeder der Mehrzahl von bekannten Codegruppen übereinstimmt, durch Berechnen eines Gesamtwertes ($\Sigma$P) für jede der bekannten Codegruppen bestimmt wird, wobei der Gesamtwert durch inkrementelles Aufwärtszählen desselben berechnet wird, wenn ein Steuercode in den Eingabedaten mit der Syntax eines Codes in der bekannten Gruppe übereinstimmt, wobei das Inkrement ein erster Betrag ist, wenn der Steuercode in den Eingabedaten eine Mehrzahl von Bytes und ein Argument mit einem kleinen Bereich aufweist, ein zweiter Betrag ist, wenn der Steuercode in den Eingabedaten eine Mehrzahl von Bytes und ein Argument aufweist, welches alle möglichen Werte des Datenelements abdeckt, und ein dritter Betrag ist, wenn der Steuercode in den Eingabedaten ein oder zwei Bytes und kein Argument aufweist, wobei der erste Betrag größer ist als der zweite Betrag und der zweite Betrag größer ist als der dritte Betrag, und durch Berechnen eines Maximalwertes ($\Sigma$Pmax) für jede der bekannten Codegruppen, wobei der Maximalwert durch inkrementelles Aufwärtszählen desselben für jeden Steuercode in den Eingabedaten berechnet wird, wobei das Inkrement ein erster Betrag ist, wenn der Steuercode in den Eingabedaten eine Mehrzahl von Bytes und ein Argument mit einem kleinen Bereich aufweist, ein zweiter Betrag ist, wenn der Steuercode in den Eingabedaten eine Mehrzahl von Bytes und ein Argument aufweist, welches alle möglichen Werte des Datenelements abdeckt, und ein dritter Betrag ist, wenn der Steuercode in den Eingabedaten ein oder zwei Bytes und kein Argument aufweist, wobei das Ausmaß, in welchem die Eingabedaten mit der Syntax von jeder der Mehrzahl bekannter Codegruppen übereinstimmt, durch Dividieren des Gesamtwertes ($\Sigma$P) durch den Maximalwert ($\Sigma$Pmax) bestimmt wird.

**8.** Verfahren nach Anspruch 6 oder 7,
dadurch gekennzeichnet,
daß ein Wert, welcher der Anzahl an Wiederholungen entspricht, mit welcher die Eingabedaten als zu jeder der Codegruppen gehörend beurteilt wird, gespeichert wird, und daß die Codes der Eingabedaten auf der Basis umgewandelt werden, daß sie von der Gruppe sind, welche den höchsten gespeicherten Wert aufweist, wenn die Gruppe, zu welcher die Eingabedaten gehören, nicht bestimmt werden kann.

## Revendications

**1.** Dispositif pour produire des données de sortie pour une opération d'impression en réponse à des données d'entrée telles que des codes de caractères et des codes de commande reçus en provenance d'un appareil, le dispositif comprenant des moyens (1, 21) de mémorisation de données d'entrée destinés à mémoriser des données reçues en provenance de l'appareil et des moyens de conversion (3, 4, 23, 24, 25, 72, 73) pour convertir des codes contenus dans les données d'entrée en codes pour ladite opération d'impression dans la mesure où les codes contenus dans les données d'entrée sont un groupe de codes particuliers, caractérisé en ce que des moyens de jugement (2, 22, 71) sont prévus pour déterminer le degré auquel la donnée d'entrée coïncide avec la syntaxe d'une pluralité de groupes de codes connus pour trouver celui des groupes de codes connus auquel la donnée appartient, et en ce que ledit moyen de conversion convertit les codes de la donnée d'entrée dans la mesure où ils sont du groupe auquel ils sont estimés appartenir par lesdits moyens de jugement.

**2.** Dispositif selon la revendication 1, caractérisé en ce que ledit moyen de conversion (3, 4, 23, 24, 25, 72, 73) comprend une pluralité d'unités de commande d'impression dont chacune répond à celui desdits groupes de codes connus qui lui correspond respectivement en produisant une donnée de sortie pour une opération d'impression, la donnée d'entrée étant appliquée à une desdites unités de commande d'impression qui est sélectionnée en fonction de celui des groupes de codes connus auquel la donnée d'entrée est estimée appartenir par lesdits moyens de jugement (2, 22, 71).

**3.** Dispositif selon la revendication 1 ou 2, caractérisé en ce que lesdits moyens de jugement déterminent le degré auquel ladite donnée d'entrée coïncide avec la syntaxe de chacun de ladite pluralité de groupes de codes connus en calculant un compte total ($\Sigma$P) pour chacun des groupes de codes connus, le compte total étant calculé en l'incrémentant lorsqu'un code de commande contenu dans la donnée d'entrée coïncide avec la syntaxe d'un code contenu dans le groupe de codes connus, l'incrément étant d'une première quantité lorsque le code de commande contenu dans la donnée d'entrée a un grand nombre d'octets et un argument compris dans un petit intervalle, d'une deuxième quantité lorsque le code de commande contenu dans la donnée possède un grand nombre d'octets et un argument qui couvre toutes les valeurs possibles de l'article de donnée, et d'une troisième quantité lorsque le code de commande contenu dans la donnée d'entrée a un ou deux octets et n'a pas d'argument, la première quantité étant supérieure à la deuxième quantité et la deuxième quantité étant supérieure à la troisième quantité, et en calculant un compte maximum ($\Sigma$Pmax) pour chacun desdits groupes de codes connus, le compte maximum étant calculé en l'incrémentant pour chaque code de commande contenu dans ladite donnée d'entrée, l'incrément étant de la première quantité lorsque le code de commande contenu dans la donnée d'entrée a un grand nombre d'octets et un argument compris dans un petit intervalle, de la deuxième quantité lorsque le code de commande contenu dans la donnée d'entrée a un grand nombre d'octets et un argument qui couvre toutes les valeurs possibles de l'article de donnée et de la troisième quantité lorsque le code de commande contenu dans la donnée d'entrée a 1 ou 2 octets et n'a pas d'argument, le degré auquel la donnée d'entrée coïncide avec la syntaxe de chacun de ladite pluralité des groupes de codes connus étant déterminé en divisant le compte total ($\Sigma$P) par le compte maximum ($\Sigma$Pmax).

**4.** Dispositif selon l'une quelconque des revendications précédentes, caractérisé en ce qu'il comprend des moyens de mémoire (74, 75) destinés à mémoriser une valeur qui correspond au nombre de fois que la donnée d'entrée est estimée appartenir à chacun des groupes de codes connus et en ce que ledit moyen de conversion convertit les codes de la donnée d'entrée dans la mesure où ils sont du groupe ayant la plus haute valeur mémorisée dans lesdits moyens de mémoire lorsque lesdits moyens de jugement ne peuvent pas déterminer le groupe auquel la donnée d'entrée appartient.

**5.** En combinaison, dispositif selon l'une quelconque des revendications précédentes et imprimante pour exécuter l'opération d'impression.

**6.** Procédé de production de données de sortie pour une opération d'impression en réponse à une donnée d'entrée telle que des codes de caractères et des codes de commande reçus en provenance d'un appareil, consistant à mémoriser des données d'entrée reçues en provenance de l'appareil, et à convertir les codes contenus dans la donnée d'entrée en codes pour ladite opération d'impression dans la mesure où les codes contenus dans la donnée d'entrée font partie d'un groupe particulier de codes, caractérisé en ce qu'on détermine le degré auquel la donnée d'entrée coïncide avec la syntaxe d'une pluralité de groupes de codes connus et qu'on utilise ce degré pour trouver celui des groupes de codes connus auquel la donnée d'entrée appartient, et en ce que les codes de la donnée d'entrée sont convertis dans la mesure où ils sont du groupe auquel ils sont estimés appartenir.

**7.** Procédé selon la revendication 6, caractérisé en ce que le degré auquel la donnée coïncide avec la syntaxe de chacun de ladite pluralité de groupes connus est déterminé en calculant un compte total ($\Sigma P$) pour chacun des groupes de codes connus, le compte total étant calculé en l'incrémentant lorsqu'un code de commande contenu dans la donnée d'entrée coïncide avec la syntaxe d'un code contenu dans le groupe de codes connus, l'incrément étant d'une première quantité lorsque le code de commande contenu dans la donnée d'entrée possède un grand nombre d'octets et un argument compris dans un petit intervalle, d'une deuxième quantité lorsque le code de commande contenu dans la donnée d'entrée possède un grand nombre d'octets et un argument qui couvre toutes les valeurs possibles de l'article de donnée, et d'une troisième quantité lorsque le code de commande contenu dans la donnée d'entrée a 1 ou 2 octets et n'a pas d'argument, la première quantité étant supérieure à la deuxième quantité et la deuxième quantité étant supérieure à la troisième quantité, et en calculant un compte maximum ($\Sigma Pmax$) pour chacun desdits groupes de codes connus, le compte maximum étant calculé en l'incrémentant pour chaque code de commande contenu dans ladite donnée d'entrée, l'incrément étant de la première quantité lorsque le code de commande contenu dans la donnée d'entrée a un grand nombre d'octets et un argument compris dans un petit intervalle, de la deuxième quantité lorsque le code de commande contenu dans la donnée d'entrée a un grand nombre d'octets et un argument qui couvre toutes les valeurs possibles de l'article de donnée et de la troisième quantité lorsque le code de commande contenu dans la donnée d'entrée a 1 ou 2 octets et n'a pas d'argument, le degré auquel la donnée d'entrée coïncide avec la syntaxe de ladite pluralité de groupes de codes connus étant déterminé en divisant le compte total ($\Sigma P$) par le compte maximum ($\Sigma Pmax$).

**8.** Procédé selon la revendication 6 ou 7, caractérisé en ce qu'une valeur correspondant au nombre de fois que la donnée d'entrée est estimée appartenir à chacun des groupes de codes connus est mémorisée et en ce que les codes de la donnée d'entrée sont convertis dans la mesure où ils sont du groupe ayant la plus haute valeur mémorisée lorsque le groupe auquel la donnée d'entrée appartient ne peut pas être déterminé.

F I G 1

F I G 2

calculate
$\Sigma P_1$

calculate
$\Sigma P_{1MAX}$

calculate
$\Sigma P_2$

calculate
$\Sigma P_{2MAX}$

30

$H_1 = \Sigma P_1 / \Sigma P_{1MAX}$

31

$H_2 = \Sigma P_2 / \Sigma P_{2MAX}$

$H_1 > H_2$

Y

N

$H_1 = H_2$

N

Y

32

33

34

35

36

**F I G   3**

| $E_{Sc}$ | A | 30H | $E_{Sc}$ | B | 00H | $I_{Sc}$ | "C" | "6" | "7" | "8" | $C_R$ | $L_F$ |

(a)

**(b)** effective region of argument   **(c)**

| | (1) | $P_{max}$ |
|---|---|---|
| $CR$ | — | 1 |
| $LF$ | — | 1 |
| $E_{Sc}$ A  n | h=30H or 31H | 3 |
| $E_{Sc}$ B  n | $8 \leq n \leq 255$ | 2 |
| $E_{Sc}$ C | — | 1 |
| | | |

| | (2) | $P_{2max}$ |
|---|---|---|
| $C_R$ | — | 1 |
| $L_F$ | — | 1 |
| $E_{Sc}$ A  n | $0 \leq n \leq 255$ | 2 |
| $E_{Sc}$ B  n | n=30H or 31H | 3 |
| $E_{Sc}$ D | — | 1 |

| $E_{Sc}$ | "A" | 30H | $E_{Sc}$ | "B" | 00H | $E_{Sc}$ | "C" | "6" | "7" | "8" | $C_R$ | $L_F$ | |
|---|---|---|---|---|---|---|---|---|---|---|---|---|---|
| | | | | | | | | | | | | | |
| | 3 | | 2 | | 1 | (3) | | | | | 1 | 1 | $\Sigma P_1$ = 8 |
| $P_{1max}$ | 3 | | 2 | | 1 | | | | | | 1 | 1 | $\Sigma P_{1max}$ = 8 |
| | | | | | | | | | | | | | |
| $P_2$ | 2 | | 8 | | 8 | (4) | | | | | 1 | 1 | $\Sigma P_2$ = 4 |
| $P_{2max}$ | 2 | | 3 | | 1 | | | | | | 1 | 1 | $\Sigma P_{2max}$ = 8 |

(d)

# F I G  4

(a)

(b)

(c)

F I G 5

FIG 6